# EUROPÄISCHE PATENTANMELDUNG

(11) **EP 0 936 062 A2**
(43) Veröffentlichungstag der Anmeldung: **18.08.1999**
(21) Anmeldenummer: 99102263.3
(22) Anmeldetag: 05.02.1999
(51) Int. Cl.: B32B 27/28, B32B 29/00, B32B 15/00, B32B 18/00, B65D 30/02

(54) **Mehrlagige Siegelschicht und damit hergestellter hermetisch versiegelbarer Packstoff**

(30) Priorität: 17.02.1998 DE 19806475
(71) Anmelder: Wolff Walsrode AG, 29655 Walsrode (DE)
(72) Erfinder: Eggers, Holger, Dr., 29664 Walsrode (DE); Klein, Rudi, 29664 Walsrode (DE)
(74) Vertreter: Pettrich, Klaus-Günter, Dr.

(57) **Zusammenfassung**

Die vorliegende Erfindung betrifft mehrlagige, unsymmetrische im Verbund mit einem Substrat als Siegelschicht verwendbare Schichtenfolge (I) mit einer siegelseitig außenliegenden Lage (b), wobei daß für die die Schichtenfolge (I) insgesamt bildende Materialzusammensetzung eine Schmelzflußrate MFR von wenigstens 0,1 g/10 min, gemessen nach DIN ISO 1133 bei 190°C und 2,16 kg, meßbar ist, die Schichtenfolge (I) eine oder mehrere Lagen (i₁), (i₂), usw. mit einer Materialzusammensetzung aufweist, die jeweils eine höhere Schmelzflußrate MFR, gemessen nach DIN ISO 1133 bei 190°C und 2,16 kg, haben als die die Lage (b) bildende Materialzusammensetzung, die Summe der Flächengewichte jeder der Lagen (i₁), (i₂), usw. wenigstens 40 %, bezogen auf das Flächengewicht der gesamten Schichtenfolge (I), beträgt.

## Beschreibung

Die vorliegende Erfindung betrifft eine Siegelschicht aus wenigstens zwei Lagen aus im wesentlichen thermoplastischen Kunststoffen sowie einen diese Siegelschicht als Bestandteil enthaltenden Packstoff. Die mehrlagige Siegelschicht ist dadurch gekennzeichnet, daß wenigstens eine Lage dieser Siegelschicht eine Zusammensetzung aufweist, die bei üblichen Siegeltemperaturen niedrigerviskos ist diejenige der zum Produkt hin weisenden Lage der Siegelschicht. Die erfindungsgemäße mehrlagige Siegelschicht zeichnet sich durch verbesserte Siegeleigenschaften, insbesondere durch eine Kombination aus hoher Siegelnahtfestigkeit unmittelbar nach der Versiegelung und einer schnellen hermetisch dichten Versiegelbarkeit ohne die Bildung von Kanülen in der Siegelnaht aus. Dadurch lassen sich sehr hohe Verarbeitungsgeschwindigkeiten erreichen. Die Erfindung umfaßt auch Packstoffe, die eine solche Siegelschicht enthalten. Gegenstand der Erfindung ist ebenso die Verwendung der mehrlagigen Siegelschicht sowie der diese enthaltenden Packstoffe für die Herstellung von Packmitteln sowie die Verwendung dieser Packmittel für die Verpackung von Lebensmitteln und anderen Gütern.

Viele Güter erfordern für Transport und/oder Lagerung einen Schutz vor der Umgebungsluft oder der umgebenden Atmosphäre. Sie müssen daher in einer Weise verpackt werden, die geeignet ist, alle oder bestimmte Bestandteile der Umgebungsatmosphäre möglichst vollständig auszuschließen.

Solche Packungen werden in vielen Fällen durch Heißversiegelung einer oder mehrerer Packstoffe zu einer Verpackung, beispielsweise einem Beutel oder einem Deckelbehälter, hergestellt. Dabei wird der Packstoff durch Verschmelzen der Siegelschicht, im Beispiel des Beutels gegen sich selbst oder im Fall einer Deckelverpackung gegen die Siegelschicht eines anderen Packstoffs, fest verschlossen. Es entsteht eine die Verpackung verschließende Siegelnaht. Der Stand der Technik beim Verpacken unter Verwendung von kunststoffhaltigen Packstoffen ist etwa in *Ahlhaus, Verpackung mit Kunststoffen, Hanser Verlag, München, 1997,* dargestellt. Spezielle Aufbauten von Packstoffen sind etwa in *Bakker, The Wiley Encyclopedia of Packaging Technology, John Wiley and Sons, New York, 1986,* oder für Folien in *Nentwig, Kunststoff-Folien, Hanser Verlag, München, 1994,* niedergelegt. Dort werden auch die Funktionsweisen von typischen Verpackungsmaschinen beschrieben.

An die Siegelnaht werden in vielen Fällen sehr hohe Anforderungen gestellt. So muß die Siegelnaht hohe mechanische Belastungen durch Füllgut, Transport oder andere Einflüsse aufnehmen können. Dies gilt in vielen Fällen bereits unmittelbar nach der Versiegelung bei noch heißer Siegelnaht. So wird etwa in sogenannten Vertikalen Schlauchbeutelmaschinen aus Zeitgründen das Füllgut noch bei geschlossenem Quersiegelwerkzeug in den geformten Schlauch gegeben. Bei Öffnung der Siegelbacken lastet das gesamte Füllgutgewicht auf der noch nicht erkalteten Siegelnaht und setzt diese dadurch einer Zugbeanspruchung aus. In anderen Fällen kann es auch ohne äußere Belastung allein durch das elastische Rückstellvermögen des Packstoffs etwa bei Versiegelung einer Falte oder im Umschlagbereich des Packstoffs zu einer gleichartigen Belastung der noch warmen Siegelnaht kommen. Bei zu geringem Zusammenhalt der Siegelnaht kommt es in solchen Fällen zum Aufzug der Naht und damit einem Versagen der Packung. Die Nahtfestigkeit im warmen Zustand unmittelbar nach der Versiegelung wird üblicherweise als Hottack bezeichnet. Ein hoher Hottack ist in Fällen wie dem oben geschilderten eine wichtige Voraussetzung für hohe Abpackgeschwindigkeiten.

Daneben muß die Siegelnaht im wieder erkalteten Zustand eine feste Versiegelung aufbringen, d.h. sie muß in diesem Zustand hohe Belastungen, denen die Verpackung bei Transport oder Lagerung ausgesetzt sein kann, ohne mechanisches Versagen aufnehmen können. Eine solchermaßen feste Siegelnaht muß als zusätzliche Bedingung für einen effizienten, d.h. schnellen und fehlerfreien Abpackvorgang mit möglichst kurzen Siegelzeiten zu erreichen sein.

Andererseits muß die Siegelnaht mit möglichst kurzen Siegelzeiten dicht zu verschließen sein. Treten Kanülen zwischen dem Inneren und dem Äußeren der Packung auf, kommt es zu einem Eindringen der umgebenden Atmosphäre und damit unter Umständen zu einer Schädigung des Füllguts. Hier ist insbesondere das Versiegeln von Falten kritisch. So kann die Packung gezielt, etwa in Form einer Längsfalte an der Seite eines Beutels oder im Schnittpunkt von Längs- und Quernaht, bzw. ungewollt bei schlechter Führung in der Maschine Falten enthalten, die bis in die Siegelnaht hineinreichen. Für eine dichte Versiegelung einer solchen Falte muß die Siegelschicht beim Siegelvorgang schnell und nachhaltig verformbar sein, um den Bereich um die und in der Falte vollständig auszufüllen, so daß es entlang der Siegelnaht auch im Faltenbereich zu einem durchgehenden Kontakt der Innenflächen der Siegelschicht bzw. der Siegelschichten kommt. Erfordert das Erreichen einer dichten Versiegelung zu lange Siegelzeiten, so reduziert sich wiederum die Verarbeitungsgeschwindigkeit der Folie auf der Verpackungsmaschine.

Die oben genannten kurzen Siegelzeiten können insbesondere dadurch erreicht werden, daß die geforderten Eigenschaften wie hohe Siegelfestigkeit, hoher Hottack und hermetisch dichte Versiegelung bei niedrigen Temperaturen erreicht werden. Auf diese Weise kann bei gegebener Temperatur des Siegelwerkzeugs - in vielen Fällen wird diese durch die Temperaturbeständigkeit des Trägers bzw. Substrats des Packstoffs limitiert - in kürzerer Zeit eine zur Ertüllung der genannten Anforderungen ausreichend hohe Temperatur in der Siegelnaht erreicht werden.

Die Ausführung von Siegelschichten in Packstoffen nach dem Stand der Technik wird im folgenden dargestellt. Für alle weiteren Darlegungen gelten die folgenden Übereinkünfte.
- Für die Beschreibung der in den einzelnen Schichten enthaltenen Polymere werden, wenn nicht anderweitig kenntlich gemacht, Kurzzeichen für Kunststoffe nach DIN 7728 bzw. ISO 1043-1987 (E) verwendet.
- Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, den Aufbau ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Gleichartige Polymere können durch eine Numerierung voneinander unterschieden werden, beispielsweise in der Form PE-LD-1//PE-LD-2//PE-LD-3. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben, handelt es sich in solchen Fällen stets um Gewichtsanteile, die auf das Gesamtgewicht der Mischung bezogen sind. So beschreibt beispielsweise der Ausdruck ...//PA//EVOH//...//(PE-LD-1+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (EVOH) bestehenden Schicht, gefolgt von einer nicht spezifizierten Schicht oder Schichtenfolge, gefolgt von einer Schicht, die eine Mischung aus einem mit der Nummer 1 versehenem Polyethylen niedriger Dichte (PE-LD-1) und einem Ethylen/a-Olefin-Copolymerisat (PE-LLD) umfaßt, sowie einer mit d näher zu spezifizierenden, auf der Siegelseite folgenden Schicht.
- Die Angabe von Schmelzpunkten bezieht sich im folgenden auf den nach ASTM 3418 mit DSC-Analyse (Differential Scanning Calorimetry Analyse) bestimmten Wert.
- Die Angabe von Schmelzflußraten bezieht sich im folgenden auf den nach DIN ISO 1133 bestimmten Wert. Es wird zusätzlich die Meßbedingung in Form der Temperatur sowie der Auflagemasse, beispielsweise Bedingung D in DIN ISO 1133 mit einer Temperatur von 190°C und einer Auflagemasse von 2,16 kg, angegeben.
- Die Dichte der Rohstoffe bezieht sich auf die Meßmethode entsprechend ISO 1183 (A).

Eine Meßmethode für die Eigenschaft Hottack ist im Zusammenhang mit den erfindungsgemäßen Beispielen angegeben. Qualitativ erfolgt die Messung in der Art und Weise, daß zwei Packstoffabschnitte mit einem definierten Druck bei einer bestimmten Temperatur und für eine gegebene Zeit in Kontakt gebracht und anschließend, während die Siegelnaht noch heiß ist, auseinandergezogen werden. Von besonderer Bedeutung ist hier, ob und in welcher Höhe eine Zeitverzögerung zwischen dem Ablösen des Siegelwerkzeugs und dem Aufbringen der Kraft zugelassen wird. Es kann die beim Auseinanderziehen vom Packstoff aufnehmbare maximale Kraft oder bei Vorgabe einer Kraft die resultierende Deformation der Siegelnaht gemessen werden. Grundsätzlich ist zwischen der Hottack-Kraft als der von der Siegelnaht nach der Versiegelung ohne Versagen aufnehmbaren Kraft und der Hottack-Temperatur als Temperaturbereich, in dem bei gegebenen Siegelbedingungen ein Mindestniveau der Hottack-Kraft erzielt werden kann, zu unterscheiden.

Die bei einem Siegelvorgang ablaufenden Teilschritte sind in *Meka und Stehling, Heat Sealing of Semicrystalline Polymer Films. II. Effect of Melting Distribution on Heat-Sealing Behavior of Polyolefins, Journal of Applied Polymer Science, Vol. 51, S. 105-119 (1994),* modellhaft dargestellt. So erfolgt zunächst durch Aufschmelzen und Druck eine Benetzung in der Siegelnaht. Im weiteren Verlauf diffundieren Kettensegmente der Polymere von beiden Seiten der Siegelnaht in die jeweils gegenüberliegende Seite hinein und erzeugen so molekulare Verschlaufungen über die Naht hinweg. Nach Entfernung des Siegelwerkzeugs erkaltet die Naht, und es kommt bei teilkristallinen Werkstoffen auch zur Ausbildung von Kristalliten über die Naht hinweg. Wird unmittelbar nach Entfernung des Siegelwerkzeugs die Siegelnaht mechanisch belastet, so müssen die Polymere der Siegelnaht also eine genügend hohe Schmelzefestigkeit aufweisen, um diese Beanspruchung aufnehmen zu können.

Mit Aufbauten von Siegelschichten in Packstoffen nach dem Stand der Technik läßt sich sowohl ein hoher Hottack als auch eine gute Kanülendichtigkeit nicht gleichzeitig erreichen.

Eine hohe Hottack-Kraft läßt sich bei Siegelschichten durch Wahl des Polymers erreichen. Copolymere aus Ethylen und Acrylsäuren (E/AA, E/MAA) ermöglichen aufgrund der auch bei hohen Temperaturen wirksamen Wasserstoffbrückenbindungen zwischen den Molekülen hohe Hottack-Kräfte und breite Hottack-Temperaturbereiche. Dies gilt wegen der ionischen Bindungskräfte in noch höherem Maße für Ionomere, neutralisierte Säurecopolymere, die Metallionen enthalten. Die Verwendung von Säurecopolymeren und lonomeren ist jedoch insofern nachteilig, als daß sie bei höheren Säuregehalten und/oder Neutralisationsgraden, die die genannten Eigenschaften erst ermöglichen, ihrerseits nicht mit Polyethylen-basierenden Polymeren verträglich sind. Dies macht eine Verwendung der Siegelschicht zur Versiegelung mit einer weiteren Polyethylen-basierenden Siegelschicht, etwa in einer Deckelverpackung, wegen der geringen so erreichbaren Siegelnahtfestigkeit unmöglich. Daneben läßt sich eine so gestaltete Verpackung nicht wieder stofflich verwerten.

Bei unpolaren Siegelmedien wie Polyethylen niedriger und hoher Dichte (PE-LD, PE-HD), Copolymerisaten aus Ethylen und α-Olefinen (PE-LLD), Copolymerisaten aus Ethylen und Propylen (E/P) oder Polypropylen (PP) läßt sich ein höherer Hottack erfahrungsgemäß bei verringertem MFR, d.h. mit längerkettigen Polymeren sowie durch geringere Langkettenverzweigung erzielen. Im Falle von PE-LLD läßt sich mit Typen, die unter Verwendung von Metallocen-Katalysatoren hergestellt werden, im folgenden als mPE-LLD bezeichnet, und die im Vergleich zu herkömmlichen mit Ziegler-Natta-Katalysatoren produzierten Typen eine engere Molmassenverteilung sowie eine gleichmäßigere Verteilung des Comonomeranteils über die Moleküle verschiedener Länge aufweisen, die Hottack-Kraft deutlich verbessern. Eine Erhöhung der Dichte bewirkt in allen Fällen nur eine geringe Veränderung der Hottack-Kraft, der Temperaturbereich wird jedoch zu höheren Werten hin verschoben.

Copolymerisate aus Ethylen und Vinylacetat (E/VA) oder Ethylen und ungesättigten Estern wie Butylacrylat oder Ethylacrylat (E/BA, E/EA) erreichen zwar mit steigendem Comonomergehalt niedrigere Siegeltemperaturen, die Hottack-Kraft nimmt jedoch ebenfalls ab.

Zum Erreichen einer guten Kanülendichtigkeit werden üblicherweise Polymere mit niedrigem Schmelzpunkt und hohem MFR, d.h. niedriger Viskosität, eingesetzt. Auf diese Weise kann das Polymer der Siegelschicht schon bei niedrigen Siegeltemperaturen in unregelmäßig geformte Abschnitte der Siegelnaht, wie etwa im Bereich von Falten, hineinfließen und sie auf diese Art und Weise verschließen.

Der Anforderung nach einer hohen Siegelfestigkeit bei kurzen Siegelzeiten kann ebenfalls durch gezielte Wahl des oder der die Siegelschicht bildenden Polymere nachgekommen werden. So läßt sich mit Polymeren, die selbst eine hohe Reißfestigkeit aufweisen auch eine gute Siegelnahtfestigkeit erzielen. Solche Polymere sind insbesondere Copolymerisate aus Ethylen und a-Olefinen (PE-LLD) im Bereich höherer Dichten, d.h. mit Dichten oberhalb ca. 910 g/cm³. Hiermit sind jedoch keine vergleichbar kurzen Siegelzeiten wie unter Verwendung von Ethylen-Copolymerisaten wie beispielsweise E/VA, E/AA, E/MAA oder dergleichen zu erzielen. Die genannten Copolymerisate aus Ethylen und a-Olefinen können für eine leichtere Verarbeitbarkeit bei in etwa gleichbleibender Nahtfestigkeit mit verzweigten Polymeren wie PE-LD abgemischt werden. Auf diese Weise kann auch die Siegelanspringtemperatur bei Bedarf zu niedrigeren Werten hin verschoben werden.

Gelingt es, bei gegebenen Siegelbedingungen eine in der Naht kanülenfreie Versiegelung zu erzielen, so wird damit notwendig auch die für die gegebene Materialkombination optimale Siegelnahtfestigkeit erreicht. Hinsichtlich der Abpackgeschwindigkeit umfaßt daher das Kriterium einer kanülenfreien Versiegelung bei kurzen Siegelzeiten auch die Anforderung nach einem frühen Siegelbeginn im Sinne des Erreichens der maximalen Siegelnahtfestigeit mit kurzen Siegelzeiten. Eine hohe Siegelnahtfestigkeit ist eine zusätzlich zur kanülenfreien Versiegelung zu erfüllende Anforderung.

Stand der Technik ist auch die Mischung der oben genannten Polymere und/oder eine mehrschichtige Ausführung der Siegelschicht. So können die oben genannten Stoffe etwa zur Kostenoptimierung in einer solchen Weise angeordnet sein, daß die auf der Innenseite der Folie liegende, dem Produkt zugewandte, Schicht sich durch einen besonders frühen Siegelbeginn auszeichnet und die sich zur Folienmitte daran anschließende Schicht zwar erst bei höheren Temperaturen schmilzt, jedoch dafür kostengünstiger ist. Gegebenenfalls kommen auch auf Basis der genannten Polymere hergestellte, etwa mit Anhydrid durch Propfung modifizierte, Stoffe als haftvermittelnde Schichten zum Einsatz. Beispiele für solche mehrlagigen Aufbauten sind die Schichtenfolgen PE-LD//E/VA oder PE-LD//E/AA//Ionomer.

EP 764679 A1 beschreibt eine kaschierbare Siegelschicht mit einer Anzahl n verschiedener Lagen, wobei, von der Siegelseite aus gesehen, in jeder Schicht der Kristallitschmelzpunkt des Polymers bzw. bei Polymermischungen derjenigen Mischkomponente, die die höchste Schmelzenthalpie erfordert, stets höher wird. Der Vorteil dieses Aufbaus liegt in der niedrigen Siegelanspringtemperatur bei gleichzeitig hoher Siegelfestigkeit. Beispiele für solche Aufbauten sind zwei- und dreischichtige Verbunde wie PE-LLD//mPE-LLD oder PE-LD//(PE-LD + PE-LLD)//(mPE-LLD + PE-LD). Diese Folien sollen einen guten Hottack aufweisen, die Kanülendichtigkeit solcher Aufbauten wird nicht erwähnt.

Wichtig für eine gute Maschinengängigkeit von Packstoffen mit solchen Siegelmedien ist auch die Gleitfähigkeit. Sie wird für die genannten Polymere nach dem Stand der Technik durch Additive verbessert. Hierzu werden Antiblockmittel in Form fester Partikel verwendet, die teilweise aus der Außenseite der Folie hervortreten und so die effektive Kontaktfläche zum benachbarten Medium verringern. Beispiele sind Siliziumoxid, Calciumcarbonat, Magnesiumsilikat, Aluminiumsilikat, Calciumphosphat, Talkum und dergleichen. Bevorzugt kommt daraus Siliziumdioxid zum Einsatz. Wirksame Mengen liegen im Bereich von 0,1 bis 2 Gewichts-%. Die mittlere Teilchengröße liegt zwischen 1 und 10 µm, wobei hier Teilchen mit kugelförmiger Gestalt besonders geeignet sind. In mehrlagigen Aufbauten werden diese Partikel bevorzugt nur in der äußeren Schicht eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gewichts-%, vorzugsweise 0,02 bis 1 Gewichts-%. Ein üblicherweise für Polyolefine eingesetztes aliphatisches Säureamid ist Erucasäureamid. Die genannten Materialien sind stets nur begrenzt im Polymer aufnahmefähig und lagern sich daher nach der Verarbeitung an den Oberflächen ab. Auf diese Weise wird dort ein gleitfähiger Film gebildet.

Zusammengefaßt soll die Siegelschicht für einen guten Hottack somit eine hohe und für eine gute Kanülendichtigkeit eine niedrige Schmelzefestigkeit aufweisen. Beide Ziele lassen sich mit bekannten ein- oder mehrlagigen Siegelschichten nach dem Stand der Technik nicht erreichen. Die Abpackgeschwindigkeiten auf typischen Verpackungsanlagen wie Horizontalen und insbesondere Vertikalen Schlauchbeutelmaschinen werden daher in vielen Fällen entweder durch einen unzureichenden Hottack oder eine zu niedrige Kanülendichtigkeit limitiert.

Es stellte sich die Aufgabe, ein Siegelmedium für Packstoffe bereitzustellen, das sowohl einen hohen Hottack als auch eine hermetisch dichte Versiegelung bei kurzen Siegelzeiten ermöglicht und damit im Verbund eines dieses Siegelmedium enthaltenden Packstoffs höhere Abpackgeschwindigkeiten zuläßt. Daneben soll die Siegelschicht eine ausreichend hohe Siegelnahtfestigkeit und im Sinne einer Kombination mit einer anderen Siegelschicht in einer Verpackung sowie im Sinne einer stofflichen Wiederverwertung der Packung mit gängigen polyolefinischen Siegelmedien verträglich und somit mit Polyethylen versiegel- und mischbar sein.

Erfindungsgemäß gelang dies durch Bereitstellung einer mehrlagigen, unsymmetrischen, im Verbund mit einem Substrat als Siegelschicht verwendbaren Schichtenfolge (I) mit einer siegelseitig außenliegenden Lage (b), dadurch gekennzeichnet, daß
für die die Schichtenfolge (I) insgesamt bildende Materialzusammensetzung eine Schmelzflußrate MFR von wenigstens 0,1 g/10 min, gemessen nach DIN ISO 1133 bei 190°C und 2,16 kg, meßbar ist,
die Schichtenfolge (I) eine oder mehrere Lagen (i₁), (i₂), usw. mit einer Materialzusammensetzung aufweist, die jeweils eine höhere Schmelzflußrate MFR, gemessen nach DIN ISO 1133 bei 190°C und 2,16 kg, haben als die die Lage (b) bildende Materialzusammensetzung,
die Summe der Flächengewichte jeder der Lagen (i₁), (i₂), usw. wenigstens 40 %, bezogen auf das Flächengewicht der gesamten Schichtenfolge (I), beträgt.

Neben den Lagen (b) und (i₁), (i₂), usw. kann die erfindungsgemäße Schichtenfolge (I) weitere Lagen enthalten.

Die erfindungsgemäße Schichtenfolge (I) enthält in bevorzugter Form Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20%, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15%, in noch weiter bevorzugter Form höchstens 8%, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die Lage (b) enthält aus den genannten Polymeren vorzugsweise Copolymerisate (PE-LLD) aus Ethylen und α-Olefinen, Polyethylen niedriger Dichte (PE-LD) und Copelymerisate aus Ethylen und Vinylacetet (E/VA). Bezogen auf das Gesamtgewicht der Lage (b) ist ein Gehalt von 50% bis 100% PE-LLD besonders bevorzugt. In einer daraus bevorzugten Ausführung ist das verwendete PE-LLD mit MetallocenKatalysatoren hergestellt und zeichnet sich durch einen Kristallitschmelzpunkt von höchstens 110°C sowie ein Verhältnis aus dem Massen- und Zahlenmittel der Molmasse (M_{W}/M_{N}) von höchstens 3 aus.

Die in der Schichtenfolge (I) Eingang findenden Polymere haben bevorzugt eine Schmelzflußrate, gemessen nach DIN ISO 1133 bei 190°C und einer Auflagemasse von 2,16 kg, von wenigstens 0,1 g/10 min und höchstens 15 g/10 min, in besonders bevorzugter Form wenigstens 0,5 g/10 min und höchstens 8 g/10 min. Dabei enthält die Lage (b) der erfindungsgemäßen mehrlagigen Schichtenfolge (I) eine Zusammensetzung mit einer Schmelzflußrate, gemessen bei 190°C und einer Auflagemasse von 2,16 kg, von wenigstens 0,1 g/10 min und höchstens 3 g/10 min, besonders bevorzugt wenigstens 0,5 g/10 min und höchstens 2 g/10 min, die Lagen (i₁, i₂, usw.) jeweils eine Zusammensetzung mit einer Schmelzflußrate, gemessen bei 190°C und einer Auflagemasse von 2,16 kg, von wenigstens dem zweifachen, bevorzugt wenigstens dem dreifachen und noch weiter bevorzugt mindestens dem vierfachen der Schmelzflußrate der die Lage (b) ,bildenden Zusammensetzung.

Die Summe der Flächengewichte jeder Lage (i₁), (i₂), usw., deren Materialzusammensetzung eine höhere Schmelzflußrate MFR, gemessen nach DIN ISO 1133 bei 190°C und 2,16 kg, aufweist als die die siegelseitig außenliegende Lage (b) bildende Materialzusammensetzung, beträgt, bezogen auf das Flächengewicht der gesamten Schichtenfolge (I), vorzugsweise wenigstens 60%, in einer noch mehr bevorzugten Ausführung wenigstens 70%.

Vorzugsweise weist die Lage (b) der erfindungsgemäßen mehrlagigen Schichtenfolge (I) eine Dicke von höchstens 50 µm, in noch geeigneterer Form von höchstens 30 µm und in noch mehr bevorzugter Ausführung von höchstens 20 µm auf. Günstig sind Dicken der Lage (b) von wenigstens 5 µm, vorzugsweise wenigstens 10 µm.

Die erfindungsgemäße mehrlagige Schichtenfolge (I) weist vorzugsweise außer der Lage (b) und den Lagen (i₁, i₂, usw.) keine weiteren Lagen auf. In daraus besonders bevorzugter Form hat (I) den Aufbau (i₂)//(i₁)//(b), in wiederum besonders bevorzugter Form den Aufbau (i₁)//(b).

Eine insbesondere mögliche Ausführung der Schichtenfolge (I) ist der Aufbau (i₁)//(b), wobei sich die Lagen (i₁) und (b) im wesentlichen nur durch die Schmelzflußrate unterscheiden.

Alle oder einzelne Lagen der Schichtenfolge (I) können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gew.-%, vorzugsweise 0,1 bis 0,8 Gew.-%. Die mittlere Teilchengröße liegt zwischen 1 und 10 µm, bevorzugt 2 und 5 µm, wobei hier Teilchen mit kugelförmiger Gestalt besonders geeignet sind. Vorzugsweise werden diese Partikel nur in der Lage (b) eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere für die oben genannten, in der Schichtenfolge (I) verwendeten, Polymere geeignetes aliphatisches Säureamid ist Erucasäureamid.

Die erfindungsgemäße Schichtenfolge (I) kann durch Zugabe von Farbstoffen eingefärbt werden.

Mit der erfindungsgemäßen mehrlagigen Siegelschicht gelingt es, ein in einen Packstoffverbund integrierbares Siegelmedium bereitzustellen, das sich nicht nur durch einen guten Hottack, sondern überraschenderweise zusätzlich durch eine hohe Kanülendichtigkeit auszeichnet. Ein diese Siegelschicht enthaltender Packstoff ermöglicht auf Verpackungsmaschinen üblicher Bauart unerwartet hohe Abpackgeschwindigkeiten bei niedrigem Anteil undichter oder mangelhaft versiegelter Packungen.

Ein weiterer Gegenstand der Erfindung ist daher ein die erfindungsgemäße mehrlagige Siegelschicht enthaltender Packstoff sowie die Verwendung dieses Packstoffs für die Verpackung von Lebensmitteln und Genußmitteln, medizinischen Produkten sowie Produkten jeglicher Art, die mit einer modifizierten Atmosphäre abgepackt werden oder in Gegenwart von Feuchtigkeit und/oder Sauerstoff verderblich sind.

### Herstellverfahren

Die erfindungsgemäße Siegelschicht sowie der sie enthaltende Packstoff läßt sich auf üblichen Anlagen zur Produktion von Mehrschichtverbunden herstellen. Der sie enthaltende Packstoff kann insbesondere eine Verbundfolie mit einem Substrat aus Papier, Aluminium, Zellglas, Polypropylen, Polyalkylenterephthalat, Polyamid, Polycarbonat, Polyvinylalkohol, EVOH, Polystyrol oder Kombinationen daraus sein, wobei die Thermoplaste gereckt oder ungereckt sein können.

Handelt es sich beim Packstoff um eine Kunststoffolie, besteht die Möglichkeit, alle oder einen Teil der Schichten der Folie gemeinsam als Blasfolie oder als Flachfolie zu coextrudieren, d.h. die Polymere dieser Schichten als Schmelzeströme zusammenzuführen und in geschmolzener Form durch eine gemeinsame Düse strömen zu lassen. Auf diese Weise läßt sich sowohl die erfindungsgemäße mehrlagige Siegelschicht fertigen als auch ein erfindungsgemäßer Folienverbund, der diese mehrlagige Siegelschicht als Bestandteil enthält.

Die erfindungsgemäße mehrlagige Siegelschicht kann auch durch Extrusionsbeschichtung, das heißt dem Auftrag der Siegelschicht in geschmolzenem Zustand auf eine vorgefertigte Trägerbahn, aufgebracht werden und auf diese Weise mit der Trägerbann den erfindungsgemäßen Packstoff bilden. Die Trägerbahn kann in diesen Fällen aus Kunststoffen wie beispielsweise den oben genannten Polymeren, Metallen, Karton, Papier, Pappe, Textilien, Vliesen, Geweben oder Verbunden aus den genannten Stoffen bestehen.

Die erfindungsgemäße mehrlagige Siegelschicht kann auch durch Extrusionskaschierung, das heißt dem Auftrag einer oder mehrerer geschmolzener thermoplastischer Polymerschichten zwischen zwei Schichtenfolgen des erfindungsgemäßen Packstoffs hergestellt werden. Dabei können die als Schmelze in den Verbund eingebrachten Schichten einen Teil der erfindungsgemäßen mehrlagigen Siegelschicht bilden. Die auf der Siegelseite zulaufende Schichtenfolge macht bei diesem Verfahren in jedem Fall einen Teil oder die Gesamtheit der erfindungsgemäßen mehrlagigen Siegelschicht aus. Die auf der anderen Seite zulaufende Bahn kann aus Kunststoffen wie beispielsweise den oben genannten Polymeren, Metallen, Karton, Papier, Pappe, Textilien, Vliesen, Geweben oder Verbunden aus den genannten Stoffen bestehen.

Werden Trägerbahn und die erfindungsgemäße mehrlagige Siegelschicht getrennt vorgefertigt, so können sie auch durch Verwendung eines Kaschierklebstoffs zum erfindungsgemäßen Packstoff verbunden werden. Dabei kann die mehrlagige Siegelschicht wiederum als Blasfolie oder als Flachfolie hergestellt worden sein und die Trägerbahn aus Kunststoffen, wie beispielsweise den oben genannten Polymeren, Metallen, Karton, Papier, Pappe, Textilien, Vliesen, Geweben oder Verbunden aus den genannten Stoffen bestehen.

Die erfindungsgemäße mehrlagige Siegelschicht kann auch nach der Extrusion einem Reckvorgang unterzogen werden. Die Orientierung kann nur in Längsrichtung, nur in Querrichtung, zuerst in Längs- und anschließend in Querrichtung, simultan in Längs- und Querrichtung oder in Kombinationen aus diesen Schritten erfolgen. Dabei kann die Reckung für die mehrlagige Siegelschicht allein oder für den sie enthaltenden Packstoff durchgeführt werden.

### Beispiele

### Versuchsreihe 1, Beispiel 1.1:

Eine Siegelschicht mit dem Aufbau PE-LD-1//(80% PE-LLD + 20% PE-LD-2) mit den Schichtdicken 40 µm // 20 µm wurde durch Coextrusion als Blasfolie hergestellt und mit einem Kaschierkleber gegen handelsübliches biaxial gerecktes Polyamid der Dicke 15 µm laminiert.

PE-LD-1 hat eine Dichte von 0,918 g/cm³, einen Schmelzpunkt von 106°C sowie einen MFR von 3,7 g/10min bei 190°C und 2,16 kg. PE-LD-2 hat eine Dichte von 0,923 g/cm³, einen Schmelzpunkt von 108°C sowie einen MFR von 2 g/10min bei 190°C und 2,16 kg und ist mit 500 ppm Erucasäureamid und 1000 ppm Siliziumoxid der mittleren Teilchengröße 15 µm ausgerüstet. PE-LLD ist ein Ethylen-Octen-Copelymerisat mit einer Dichte von 0,920 g/cm³, einem Schmelzpunkt von 124°C sowie einem MFR von 1,1 g/10min bei 190°C und 2,16 kg.

### Versuchsreihe 1, Beispiel 1.2:

Laminat aus Beispiel 1.1, wobei die Siegelschicht den Aufbau Aufbau PE-LD-3//(80% PE-LLD + 20% PE-LD-2) mit den Schichtdicken 40 µm //20 µm hat und wie in Beispiel 1.1 hergestellt wurde. Der Unterschied zu Beispiel 1.1 besteht zwischen PE-LD-1 und PE-LD-3, wobei PE-LD-3 eine Dichte von 0,915 g/cm³, einen Schmelzpunkt von 104°C sowie einen MFR von 8 g/10min bei 190°C und 2,16 kg hat.

### Versuchsreihe 1, Vergleichsbeispiel 1.3:

Laminat aus Beispiel 1.1, wobei die Siegelschicht den Aufbau PE-LD-4//(80% PE-LLD + 20% PE-LD-2) mit den Schichtdicken 40 µm // 20 µm hat und wie in Beispiel 1.1 hergestellt wurde. Der Unterschied zu Beispiel 1.1 besteht zwischen PE-LD-1 und PE-LD-4, wobei PE-LD-4 eine Dichte von 0,923 g/cm³, einen Schmelzpunktvon 111°C sowie einen MFR von 0,9 g/10min bei 190°C und 2,16kg hat.

### Versuchsreihe 2, Beispiel 2.1:

Laminat wie in Beispiel 1.1, wobei die Siegelschicht den Aufbau E/VA-1//E-VA-2 in den Dicken 35 µm // 15 µm hat. Beide E/VA-Copolymerisate haben einen Vinylacetatgehalt von 5,0%, eine Dichte von 0,925 g/cm³ und einen Schmelzpunkt von 101°C. Bei 190°C und 2,16 kg hat E/VA-1 einen MFR von 8 g/10min und E/VA-2 einen MFR von 2 g/10 min.

### Versuchsreihe 2, Vergleichsbeispiel 2.2:

Laminat wie in Beispiel 1.1, wobei die Siegelschicht den einlagigen Aufbau E/VA-2 in der Dicke 50 µm hat. E/VA-2 entspricht dem gleichnamigen Polymer aus Beispiel 3.

### Versuchsreihe 2, Vergleichsbeispiel 2.3:

Laminat wie in Beispiel 2.1, wobei die Siegelschicht den Aufbau E/VA-2//E-VA-1 in den Dicken 15 µm // 35 µm hat. Beide E/VA-Copolymerisate haben einen Vinylacetatgehalt von 5,0%, eine Dichte von 0,925 g/cm³ und einen Schmelzpunkt von 101°C. Bei 190°C und 2,16 kg hat E/VA-1 einen MFR von 8 g/10min und E/VA-2 einen MFR von 2 g/10 min.

### Versuchsreihe 3, Beispiel 3.1:

Laminat wie in Beispiel 1.1, wobei die Siegelschicht den Aufbau PE-LD-5//E/VA-1//(60% mPE-LLD + 40% PE-LD-6) in den Dicken 10 µm // 30 µm // 10 µm aufweist. PE-LD-5 hat eine Dichte von 0,922 g/cm³, einen Schmelzpunkt von 109°C sowie einen MFR von 0,3 g/10min bei 190°C und 2,16 kg, PE-LD-6 hat eine Dichte von 0,919 g/cm³, einen Schmelzpunkt von 105°C sowie einen MFR von 0,3 g/10min bei 190°C und 2,16 kg, mPE-LLD hat eine Dichte von 0,902 g/cm³, einen Schmelzpunkt von 100°C sowie einen MFR von 1 g/10min bei 190°C und 2,16 kg. mPE-LLD ist mit einem Metallocen-Katalysator hergestellt. E/VA-1 entspricht dem gleichnamigen Polymer aus Beispiel 2.1.

### Versuchsreihe 3, Vergleichsbeispiel 3.2:

Laminat aus Beispiel 1.1, wobei die Siegelschicht den Aufbau (60% mPE-LLD + 40% PE-LD-6) mit der Dicke 50 µm aufweist und wie in Beispiel 1.1 hergestellt wurde. Die Polymere mPE-LLD und PE-LD-6 entsprechen den gleichnamigen Typen aus Beispiel 3.1.

An den beispielhaften erfindungsgemäßen Folien sowie an den Vergleichsbeispielen wurden die folgenden Eigenschaften wie folgt gemessen:
• Siegelfestigkeit
   Aus der zu prüfenden Folienbahn werden zwei fehlerfreie, saubere Probenstreifen entnommen. Zur Siegelung werden sie mit den zu versiegelnden Flächen aufeinandergelegt und so zwischen die Siegelbacken gehalten, daß die Probe an jeder Seite mindestens 1 cm übersteht. Die Siegelung erfolgt senkrecht zur Folienlaufrichtung. Die Siegelbacken sind glatt und beidseitig auf die Nenn-Siegeltemperatur beheizt. Die Siegelung erfolgt standardmäßig für 0,5 Sekunden mit einem Druck von 50 N/cm². Es wurden auch exemplarisch Vergleichsmessungen für kürzere Siegelzeiten durchgeführt. In den nachstehenden Tabellen beziehen sich ohne Angabe der Siegelzeit aufgeführte Daten stets auf eine Siegelzeit von 0,5 s. Davon abweichende Prüfbedingungen werden angegeben. Aus der so hergestellten Siegelnaht wird nach dem Erkalten ein 15 mm breiter Prüfstreifen ausgeschnitten und auf einer Zugprüfmaschine mit einer Geschwindigkeit von 100 mm/min und einer Einspannlänge von 20 mm getestet. Dabei wird der Maximalwert der zum Zertrennen der versiegelten Folien erforderlichen Kraft als Siegelfestigkeit aufgezeichnet.
• Hottack-Kraft
   Aus dem zu prüfenden Material werden in Laufrichtung ca. 90 mm lange und 45 mm breite Probestreifen entnommen, die mit den versiegelnden Seiten gegeneinander in die Probenhalterung gespannt werden. Die Siegelung erfolgt mit den gleichen Bedingungen hinsichtlich Siegelwerkzeug, Druck und Zeit wie für die Siegelfestigkeit, d.h. über einen 20 mm breiten Bereich. Unmittelbar nach Beendigung der Siegelprüfung erfolgt die Festigkeitsprütung der warmen Siegelnaht mit einer Abzugsgeschwindigkeit von 25 m/min. Der Kraftverlauf wird elektronisch gemessen und mittels PC gespeichert. Der Höchstwert der Kraft wird aus einer graphischen Darstellung des Kraftverlaufs abgelesen.
• Nahtdichtigkeit
   Das zu prüfende Material wird im Format 20 x 20 cm ausgeschnitten und an einer Kante mit den zu versiegelnden Seiten zusammengelegt. Diese Kante wird anschließend in der unter 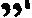 Siegelfestigkeit" beschriebenen Art und Weise versiegelt, die entstandene Siegelnaht wird als 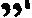 Längsnaht" bezeichnet. Der so gebildete Schlauch wird dann auf einer der noch offenen Querseiten bei flachgelegter Längsnaht in der gleichen Weise versiegelt. Dabei bildet die flachgelegte Längsnaht eine Falte. In den so geformten Halbbeutel wird in den Nahtzwickel aus Längs- und Quernaht ein ca. 5 mm hoher Sumpf aus mit Methylenblau eingefärbtem Methanol gefüllt. Etwaige Kanülen in der Naht werden durch die durch sie hindurchdringende Methylenblau-Lösung angezeigt. Es wird notiert, ob Undichtigkeiten auftreten oder ob die Quernaht über die gesamte Breite dicht versiegelt ist.

Die Ergebnisse sind in untenstehenden Tabellen zusammengefaßt:

| Merkmal | Einheit | Beispiel bzw. Vergleichsbeispiel | | |
|---|---|---|---|---|
| | | Bsp. 1.1 | Bsp. 1.2 | Vgl. 1.3 |
| Siegelfestigkeit bei 100°C | N/15 mm | 0,5 | 0,6 | 0,5 |
| Siegelfestigkeit bei 110°C | N/15 mm | 5,4 | 4,6 | 5,2 |
| Siegelfestigkeit bei 120°C | N/15 mm | 39,2 | 40,7 | 43,6 |
| Siegelfestigkeit bei 130°C | N/15 mm | 45,4 | 44,8 | 46,0 |
| maximale Hottack-Kraft bei 100°C | N/45 mm | 4,2 | 5,1 | 4,9 |
| maximale Hottack-Kraft bei 110°C | N/45 mm | 21,6 | 22,5 | 23,1 |
| maximale Hottack-Kraft bei 120°C | N/45 mm | 47,0 | 45,9 | 50,1 |
| maximale Hottack-Kraft bei 130°C | N/45 mm | 35,1 | 32,8 | 37,6 |
| Kanülen im Beutel bei Siegelung 100°C | ja/nein | ja | ja | ja |
| Kanülen im Beutel bei Siegelung 110°C | ja/nein | ja | nein | ja |
| Kanülen im Beutel bei Siegelung 115°C | ja/nein | nein | nein | ja |
| Kanülen im Beutel bei Siegelung 120°C | ja/nein | nein | nein | ja |
| Kanülen im Beutel bei Siegelung 130°C | ja/nein | nein | nein | ja |

*Eigenschaften von erfindungsgemäßen Folien und Vergleichsmustern, Versuchsreihe 1*

| Merkmal | Einheit | Beispiel bzw. Vergleichsbeispiel | | |
|---|---|---|---|---|
| | | Bsp. 2.1 | Vgl. 2.2 | Vgl. 2.3 |
| Siegelfestigkeit bei 90°C | N/15 mm | 0,7 | 0,3 | 0,5 |
| Siegelfestigkeit bei 100°C | N/15 mm | 25,3 | 23,9 | 24,6 |
| Siegelfestigkeit bei 110°C | N/15 mm | 33,8 | 32,0 | 34,7 |
| Siegelfestigkeit bei 120°C | N/15 mm | 34,2 | 35,7 | 33,2 |
| maximale Hottack-Kraft bei 90°C | N/45 mm | 4,1 | 3,4 | 2,2 |
| maximale Hottack-Kraft bei 100°C | N/45 mm | 9,7 | 10,5 | 2,9 |
| maximale Hottack-Kraft bei 110°C | N/45 mm | 7,5 | 8,3 | 2,5 |
| maximale Hottack-Kraft bei 120°C | N/45 mm | 6,0 | 7,5 | 1,9 |
| Kanülen im Beutel bei Siegelung 90°C | ja/nein | ja | ja | ja |
| Kanülen im Beutel bei Siegelung 100°C | ja/nein | ja | ja | ja |
| Kanülen im Beutel bei Siegelung 110°C | ja/nein | nein | ja | nein |
| Kanülen im Beutel bei Siegelung 120°C | ja/nein | nein | ja | nein |

*Eigenschaften von erfindungsgemäßen Folien und Vergleichsmustern, Versuchsreihe 2*

| Merkmal | Einheit | Beispiel bzw. Vergleichsbeispiel | |
|---|---|---|---|
| | | Bsp. 3.1 | Vgl. 3.2 |
| Siegelfestigkeit bei 80°C | N/15 mm | 0,4 | 0,6 |
| Siegelfestigkeit bei 90°C | N/15 mm | 10,8 | 11,2 |
| Siegelfestigkeit bei 100°C | N/15 mm | 44,0 | 46,2 |
| Siegelfestigkeit bei 110°C | N/15 mm | 46,9 | 49,8 |
| Siegelfestigkeit bei 1 20°C | N/15 mm | 50,3 | 58,1 |
| maximale Hottack-Kraft bei 80°C | N/45 mm | 4,5 | 3,4 |
| maximale Hottack-Kraft bei 90°C | N/45 mm | 25,4 | 23,1 |
| maximale Hottack-Kraft bei 100°C | N/45 mm | 29,8 | 30,5 |
| maximale Hottack-Kraft bei 110°C | N/45 mm | 27,2 | 34,5 |
| maximale Hottack-Kraft bei 120°C | N/45 mm | 24,0 | 19,9 |
| Kanülen im Beutel bei Siegelung 90°C | ja/nein | ja | ja |
| Kanülen im Beutel bei Siegelung 100°C | ja/nein | ja | ja |
| Kanülen im Beutel bei Siegelung 110°C | ja/nein | nein | ja |
| Kanülen im Beutel bei Siegelung 120°C | ja/nein | nein | ja |
| Siegelfestigkeit bei 120°C, Siegelzeit = 0,25 s | N/15 mm | 47,2 | 48,8 |
| maximale Hottack-Kraft bei 120°C, Siegelzeit = 0,25 s | N/45 mm | 28,3 | 29,6 |
| Kanülen bei Siegelung 120°C, Siegelzeit = 0,25 s | ja/nein | nein | ja |

*Eigenschaften von erfindungsgemäßen Folien und Vergleichsmustern, Versuchsreihe 3*

Die geforderte hermetisch dichte Versiegelung wird von der erfindungsgemäßen Siegelschicht in den beispielhaft gezeigten Ausführungen also schon bei deutlich niedrigeren Siegeltemperaturen erreicht als bei vergleichbaren Typen nach dem Stand der Technik. Hottack und Siegelfestigkeit werden dabei nicht negativ beeinflußt. Die bei niedrigeren Temperaturen erreichte Kanülenfreiheit bedeutet aber auch, daß dies bei gleicher Siegeltemperatur und verkürzter Siegelzeit möglich ist. Dieser Umstand wurde exemplarisch für die Versuchsreihe 3 verifiziert.

## Patentansprüche

1. Mehrlagige, unsymmetrische, im Verbund mit einem Substrat als Siegelschicht verwendbare Schichtenfolge (I) mit einer siegelseitig außenliegenden Lage (b), dadurch gekennzeichnet, daß für die die Schichtenfolge (I) insgesamt bildende Materialzusammensetzung eine Schmelzflußrate MFR von wenigstens 0,1 g/10 min, gemessen nach DIN ISO 1133 bei 190°C und 2,16 kg, meßbar ist,
die Schichtenfolge (I) eine oder mehrere Lagen (i₁), (i₂), usw. mit einer Materialzusammensetzung aufweist, die jeweils eine höhere Schmelzflußrate MFR, gemessen nach DIN ISO 1133 bei 190°C und 2,16 kg, haben als die die Lage (b) bildende Materialzusammensetzung,
die Summe der Flächengewichte jeder der Lagen (i₁), (i₂), usw. wenigstens 40 %, bezogen auf das Flächengewicht der gesamten Schichtenfolge (I), beträgt.

2. Schichtenfolge nach Anspruch 1, dadurch gekennzeichnet, daß die Lage (b) eine Zusammensetzung mit einer Schmelzflußrate, gemessen bei 190°C und einer Auflagemasse von 2,16 kg, von wenigstens 0,1 g/10 min und höchstens 3 g/10 min aufweist.

3. Schichtenfolge nach Anspruch 2, dadurch gekennzeichnet, daß die Lage (b) eine Zusammensetzung mit einer Schmelzflußrate, gemessen bei 190°C und einer Auflagemasse von 2,16 kg, von wenigstens 0,5 g/10 min und höchstens 2 g/10 min aufweist.

4. Schichtenfolge nach einem der Ansprüche 1 bis 3, dadurch gekennzeichnet, daß die Lagen (i₁), (i₂), usw. jeweils eine Zusammensetzung mit einer Schmelzflußrate, gemessen bei 190°C und einer Auflagemasse von 2,16 kg, von wenigstens dem zweifachen der Schmelzflußrate der die Lage (b) bildenden Zusammensetzung aufweisen.

5. Schichtenfolge nach Anspruch 4, dadurch gekennzeichnet, daß die Lagen (i₁), (i₂), usw. jeweils eine Zusammensetzung mit einer Schmelzflußrate, gemessen bei 190°C und einer Auflagemasse von 2,16 kg, von wenigstens dem dreifachen der Schmelzflußrate der die Lage (b) bildenden Zusammensetzung aufweisen.

6. Schichtenfolge nach einem der Ansprüche 1 bis 5, für die die Summe der Flächengewichte jeder der Lagen (i₁), (i₂), usw. wenigstens 60 %, bezogen auf das Flächengewicht der gesamten Schichtenfolge (I), beträgt.

7. Schichtenfolge nach einem der Ansprüche 1 bis 6, für die die Summe der Flächengewichte jeder der Lagen (i₁), (i₂), usw. wenigstens 70 %, bezogen auf das Flächengewicht der gesamten Schichtenfolge (I), beträgt.

8. Schichtenfolge nach einem der Ansprüche 1 bis 7, dadurch gekennzeichnet, daß die Dicke der Lage (b) wenigstens 5 µm und höchstens 50 µm beträgt.

9. Schichtenfolge nach einem der Ansprüche 1 bis 8, dadurch gekennzeichnet, daß die Dicke der Lage (b) wenigstens 10 µm und höchstens 30 µm beträgt.

10. Schichtenfolge nach einem der Ansprüche 1 bis 9, dadurch gekennzeichnet, daß die Dicke der Lage (b) wenigstens 10 µm und höchstens 20 µm beträgt.

11. Schichtenfolge nach einem der Ansprüche 1 bis 10, die außer der Lage (b) und den Lagen (i₁), (i₂), usw. keine weiteren Lagen enthält.

12. Schichtenfolge nach Anspruch 11 mit dem Aufbau (i₂)//(i₁)//(b) oder dem Aufbau (i₁)//(b).

13. Schichtenfolge nach einem der Ansprüche 1 bis 12, dadurch gekennzeichnet, daß sie Polymere oder Mischungen aus Polymeren aus der Gruppe umfassend Copolymerisate aus Ethylen und Vinylacetat (E/VA), Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), Salze der Copolymerisate aus Ethylen und ungesättigten Carbonsäuren (Ionomere), Polyethylen niedriger Dichte (PE-LD), Polyethylen hoher Dichte (PE-HD) und Copolymerisate (PE-LLD) aus Ethylen und α-Olefinen mit wenigstens 3 C-Atomen, beispielsweise Buten, Hexen, Octen, 4-Methyl-Penten-1, die mit konventionellen oder mit Metallocen-Katalysatoren hergestellt sein können, enthalten.

14. Schichtenfolge nach Anspruch 13, dadurch gekennzeichnet, daß sie Polymere oder Mischungen aus Polymeren aus der Gruppe umfassend Copolymerisate aus Ethylen und Vinylacetat (E/VA) mit einem Vinylacetat-Gehalt, bezogen auf das Gesamtgewicht des Polymers, von höchstens 20%, Copolymerisate aus Ethylen und ungesättigten Carbonsäuren (E/AA, E/MAA) mit einem Gehalt des Carbonsäurecomonomers, bezogen auf das Gesamtgewicht des Polymers, von höchstens 8%, Salze der Copolymerisate aus Ethylen und ungesättigten Carbonsäuren (Ionomere) mit einem Gehalt des Carbonsäure-Comonomers, bezogen auf das Gesamtgewicht des Ionomers, von höchstens 10%, Polyethylen niedriger Dichte (PE-LD) in einer Dichte von wenigstens 0,91 g/cm³ und höchstens 0,935 g/cm³ und Copelymerisate (PE-LLD) aus Ethylen und α-Olefinen mit einer Dichte von wenigstens 0,90 g/cm³ und höchstens 0,94 g/cm³ enthalten.

15. Schichtenfolge nach einem der Ansprüche 1 bis 14, dadurch gekennzeichnet, daß die Lage (b) Copolymerisate (PE-LLD) aus Ethylen und α-Olefinen sowie gegebenenfalls Polyethylen niedriger Dichte (PE-LD) und/oder Copolymerisate aus Ethylen und Vinylacetet (E/VA) enthält und bezogen auf das Gesamtgewicht der Lage (b) einen Gehalt von 50% bis 100% PE-LLD aufweist.

16. Schichtenfolge nach Anspruch 15, dadurch gekennzeichnet daß das verwendete PE-LLD mit Metallocen-Katalysatoren hergestellt ist und sich durch einen Kristallitschmelzpunkt von höchstens 110°C sowie ein Verhältnis aus dem Massen- und Zahlenmittel der Molmasse (M_{w}/M_{N}) von höchstens 3 auszeichnet.

17. Schichtenfolge nach einem der Ansprüche 1 bis 16, dadurch gekennzeichnet, daß eine oder mehrere Lagen weitere organische oder anorganische Bestandteile enthält.

18. Schichtenfolge nach einem der Ansprüche 1 bis 17, dadurch gekennzeichnet, daß die Lage (b) feste anorganische Partikel wie Siliziumoxid, Calciumcarbonat, Magnesiumsilikat, Aluminiumsilikat, Calciumphosphat, Talkum und dergleichen in einer Menge von 0,1 bis 2 Gewichts-%, bezogen auf das Gesamtgewicht der Lage (b), enthält.

19. Packstoff mit einer Schichtenfolge (I) nach einem der Ansprüche 1 bis 18.

20. Packstoff nach Anspruch 19, dadurch gekennzeichnet, daß er neben der Schichtenfolge (I) nach einem der Ansprüche 1 bis 18 weitere Kunststoffe, Metalle, Karton, Papier, Pappe, Textilien, Vliese, Gewebe oder Verbunden aus den genannten Stoffen enthält.

21. Verbundfolie, dadurch gekennzeichnet, daß sie neben der Schichtenfolge (I) nach einem der Ansprüche 1 bis 18 ein Substrat aus Papier, Aluminium, Zellglas, Polypropylen, Polyalkylenterephthalat, Polyamid, Polycarbonat, Polyvinylalkohol, EVOH, Polystyrol oder Kombinationen daraus in gereckter oder ungereckter Form enthält.

22. Verwendung der Schichtenfolge (I) nach den Ansprüchen 1 bis 18, des Packstoffs nach den Ansprüchen 19 bis 20 oder der Verbundfolie nach Anspruch 21 für die Verpackung von Lebensmitteln oder Genußmitteln oder medizinischen Produkten oder anderen Produkten, die in Gegenwart von Feuchtigkeit und/oder Sauerstoff verderblich sind.

23. Verwendung der Schichtenfolge (I) nach den Ansprüchen 1 bis 18, des Packstoffs nach den Ansprüchen 19 bis 20 oder der Verbundfolie nach Anspruch 21 für die Verpackung von Gütern mit modifizierter Atmosphäre.
